## Europäisches Patentamt
## European Patent Office
## Office européen des brevets

(11) Publication number: **0 020 094**
**B1**

(12) # EUROPEAN PATENT SPECIFICATION

(45) Date of publication of patent specification: **29.09.82**

(21) Application number: **80301697.1**

(22) Date of filing: **22.05.80**

(51) Int. Cl.³: **C 10 G 21/00,**
**B 01 D 17/04, B 01 D 11/04**

(54) An improved solvent extraction process for providing lubricating oil fractions.

(30) Priority: **30.05.79 US 43919**

(43) Date of publication of application:
**10.12.80 Bulletin 80/25**

(45) Publication of the grant of the patent:
**29.09.82 Bulletin 82/39**

(84) Designated Contracting States:
**BE DE FR GB IT NL**

(56) References cited:
**US - A - 2 914 471**
**US - A - 3 152 196**
**US - A - 3 417 159**
**US - A - 3 488 283**
**US - A - 3 830 371**
**US - A - 3 919 081**

**REVUE DE L'INSTITUT FRANCAIS DU PETROLE,
vol. 34, no. 2, May/April 1979, Paris FR
SANCHEZ et al.: "Application de la coalescence
à l'extraction des phénols par solvant", pages
307—323**

(73) Proprietor: **MOBIL OIL CORPORATION**
**150 East 42nd Street**
**New York New York 10017 (US)**

(72) Inventor: **Audeh, Costandi Amin**
**694 Prospect Avenue**
**Princeton, New Jersey (US)**
Inventor: **Heilwell, Israel Joel**
**47 Lynwood Circle**
**Princeton, New Jersey (US)**
Inventor: **White, James Russell**
**30 Milkyo Drive**
**Washington Crossing, Pennsylvania (US)**
Inventor: **Yan, Tsuong Yuan**
**2427 Fairmont Avenue**
**Philadelphia, Pennsylvania (US)**

(74) Representative: **Cooper, John Anthony et al,**
**Mobil Court 3 Clements Inn**
**London WC2A 2EB (GB)**

An improved solvent extraction process for providing lubricating oil fractions

The invention relates to a process for producing lubricating oil fractions by solvent extraction. It more particularly relates to an improvement to such process whereby coalescing surfaces are placed in the path of the extract phase before it leaves the extractor.

Solvent extraction is a well established process used in the refining of petroleum, the first application having been made in about 1911. Originally, upgrading of kerosine was a major use but the improvement obtained in solvent extracting lubricating oils and other products soon became an important application. Solvent extraction is used extensively in the petroleum refining industry to refine lubricating oils, kerosine and speciality oils for medicinal and agricultural purposes. It is also used for upgrading charge stocks for catalytic cracking operations as well as for separating light aromatics from gasoline. Solvent extraction is a process that separates hydrocarbon mixtures into two phases; a raffinate phase which contains substances of relatively high hydrogen to carbon ratio, often called paraffinic type materials, and an extract phase which contains substances of relatively low hydrogen to carbon ratio, often called aromatica type materials. Therefore, it may be said that solvent extraction is possible because different liquid compounds have different solution affinities for each other, and some combinations are completely miscible while other combinations are almost immiscible. The ability to distinguish between high carbon to hydrogen aromatic type and low carbon to hydrogen or paraffinic type materials is termed selectivity. The more finely this distinguishing can be done the higher the selectivity of the solvent.

The prior art on solvent extraction is extensive, so no long list of references will be given. U.S. 3,488,283 and 4,035,287 are typical of the available knowledge. No art is known disclosing the claimed invention, however.

Oil is made up of compounds consisting of paraffins and of naphthenic and aromatic rings carrying side chains of varying number, length and structure. Long side chains are characteristic of molecules of high paraffinicity and high viscosity index, while polynaphthenic and polyaromatic structures with fewer and shorter chains will show low viscosity index and high viscosity-gravity constant. The division between compounds of long and short side chains, therefore, is necessarily not sharp and undoubtedly some constituents of high VI are lost in any extraction process. Furthermore, it has been demonstrated that the "purity" of a vacuum distillate plays an important role in its solvent extraction characteristics. For example, laboratory settling time, at equilibrium phase separation, as well as extraction yield at a commercial extraction unit, are related to distillate quality and its deterioration.

Terms which are use extensively in solvent extraction operations include "solvent" for the extracting agent, "solute" for the readily soluble material in the feed "extract" for the material removed from the feed, "raffinate" for the non-dissolved product, "reflux" for extract material returned to the extractor and "rich solvent" for the solvent extract solution withdrawn from the extractor.

Solvents which have been used in commercial operations include furfural, phenol, cresylic acid, nitrobenzene, dichloroethyl ether, sulfur dioxide and others. If desired, these solvents may be used in the presence of diluents such as benzene, carbon disulfide, ethers and carbon tetrachloride. Generally, the diluents increase the solubility of all of the hydrocarbons. The use of diluents however can reduce solvent selectivity.

Furfural is a preferred solvent extraction agent for lubricating oil production. Its solubility characteristics and its chemical and physical properties permit use with both highly aromatic and highly paraffinic oils of wide boiling range. Light and heavy lubricating stocks are usually refined with furfural. For lubricating oils it has been used in the prior art at elevated temperatures in the range of 49°C (120°F) to 143°C (290°F) and with from 1 to 4 volumes to furfural to 1 volume of oil. While this broad range of furfural to oil ratio can be used in our invention, we prefer to use a ratio of from 1.0 to 3.5, and more preferably from 1.5 to 2.8.

In a typical furfural solvent extraction plant for lubricating oils (and one of which is applicable to the present process, at least that portion of it prior to electrical extraction), the raw feed or distillate fraction, at a temperature of 43° to 149°C (110° to 300°F) and depending upon the nature of the oil, is introduced below or at about the center of the extraction tower. Furfural is fed into the top or upper portion of the tower at a somewhat narrower range of temperatures selected from within the range of 66°C (150°F) to 143°C (290°F). Recycle extract may be introduced into the lower section of the tower as reflux. Likewise, internal reflux is effected in the tower by the temperature gradient which is brought about by introducing the solvent at an elevated temperature and by intermediate cooling systems. Furfural solvent is recovered from the raffinate and extract phase streams or layers in suitable distillation and stripping equipment. The stripped and recovered solvent is then returned or recycled for use in the process as above described.

Finished lubricating base oils are generally divided into the following three broad grade classifications:

| | Viscosity Range, Saybolt Seconds Universal | Boiling Range, °C (°F) |
|---|---|---|
| Light neutrals | 100—250 at 38°C (100°F) | 343—482°C (650—900°F) |
| Heavy neutrals | 350—750 at 38°C (100°F) | 454—538°C (850—1000°F) |
| Bright stocks | 110—200 at 99°C (210°F) | >510°C (>950°F) |

The light and heavy neutrals are normally produced from adjacent boiling vacuum tower distillates that are solvent extracted and dewaxed. The bright stock is produced from the vacuum tower residuum remaining after the light and heavy neutral distillates have been boiled off. The residuum is first deasphalted and the deasphalted oil is then solvent extracted and dewaxed. It has been found that these three grades of unrefined stocks from any given lube crude have markedly different refining requirements to achieve normal quality levels, as measured by viscosity index. The heavier higher boiling stocks from a crude are more difficult to refine to a given viscosity index level than is the adjacent lower boiling fraction. Therefore, under the conditions described in this invention, "high" viscosity index products from a given crude will vary with viscosity grade as follows:

| | High viscosity index product |
|---|---|
| Light neutral | 95—115 |
| Heavy neutral | 95—105 |
| Bright stock | 90—100 |

These numerical V.I. levels thus represent equivalent extraction severities for the several viscosity grades of products. The V.I. rating of lubricating oil products can then be generally described in terms of any one of these viscosity grades in accordance with this relationship.

Crude oils are classified by the Bureau of Mines into three categories according to the predominant composition of their 391—420°C (736—788°F) fraction as paraffinic, intermediate and naphthenic. Paraffinic crude such as Pennsylvania or High Pour Libyan crudes contain considerable amounts of wax, while some naphthenic crudes such as coastal crudes contain no wax. Intermediate crudes such as Mid-Continent, Kuwait or East Texas contain varying amounts of wax. Thus, it can be seen that crude source is especially important in the manufacture of premium lubricants as various lubrication duties require oils of different chemical composition and properties.

Results of a relatively broad literature review indicate that relatively high V.I. lubricating oil components, above about 120 V.I. are present in many crude lubricating oil fractions. However, recovery of these high V.I. components in a stable oil fraction has been the subject of considerable investigation. It has been found upon review of the prior art and literature methods for recovering high V.I. lubricating constituents that the processes employed are generally regarded as exotic extraction and distillation schemes which are of little or no commercial interest primarily because of cost involved.

Basically, all extraction processes are similar. Each consists of facilities to contact the oil with a selective solvent that separates by extraction one or more types of the oil constituents from other types of oil constituents plus facilities to separate solvent from the extract and raffinate streams thus obtained. The solvent must be recovered in substantially every circuit of the system. As large amounts of solvent are circulated, the heat requirements are high and, unless employed in an extremely efficient manner, they constitute one of the major operating expenses. The normal extraction equipment is relatively simple but the solvent recovery facilities are necessarily complex and therefore expensive and any means by which these costs or facilities can be simplified contribute to the commercial interests of the process.

In accordance with the invention there is provided an improved method of producing lubricating oils by solvent extraction which comprises contacting a lubricating oil-containing hydrocarbon charge under conditions of solvent selectivity to permit the recovery of a raffinate phase which, upon dewaxing, will provide a lubricating oil product, preferably one having a viscosity index of at least 90, the improvement whereby a coalescing surface is placed to contact the extract phase prior to its exit from the extractor.

Searching for a method for improving the separation qualities of a distillate during extraction without the necessity for upgrading such distillate led to the present invention, whereby phase separation is enhanced and the yield of raffinate is increased.

In carrying out the present invention, 1 part of the distillate to be extracted is introduced at the lower part of a mixing zone, the packed section of an extraction unit, where it moves toward the top thereof. Concurrently, 1.0 to 4.0, preferably 1.5 to 2.8 volumes of furfural or other solvent per volume

3

of oil are introduced at the top part of the mixing zone in the extraction unit where it moves downward toward the bottom of the unit. Distillate moving up meets solvent moving down, effects the desired extraction and results in the separation of two phases, a raffinate phase and an extract phase. The raffinate phase exits the extraction unit at the top and the extract phase at the bottom. In this invention the extract phase is made to pass over a coalescing surface prior to its exit from the extraction unit.

The extraction unit is operated so that the mixture will move in the mixing zone at a linear velocity, based on the total volume of liquids introduced into the column per minute of from 0.5 to 1.8 cm. per minute, preferably from 0.8 to 1.1 cm. per minute.

Included among the effective materials that may be used as coalescing surfaces are polypropylene, teflon (tm) carborundum (tm), Bender Slag and quartz. While it is not believed to be a critical feature the sizes of these surfaces can vary from 1.67 to 1.20 mm (10—14 mesh) to 0.59 to 0.42 mm (30—40 mesh) for particles and 0.127cm to 0.64 cm (0.005 to 0.25 inch) in diameter for fibres or for flakes.

Although in the Examples the coalescer surfaces were placed in the settling zone 12.7 cm from the interface, this is not critical. They can be placed at any point in the extractor where there will be substantial contact with the extract phase.

The following Examples will serve to illustrate the invention. They are not meant to limit the invention, however.

Example 1

This Example illustrates the improvement in raffinate yield using various coalescing materials. The feed was an Arab Light heavy neutral distillate having the following properties:

TABLE 1

| | |
|---|---|
| Gravity, °API | 18.8 |
| Sp. Gravity, 60/16°C (60°F) | 0.9415 |
| Pour Point, °C (°F) | 46 (115) |
| Neut. No. | 0.14 |
| Aniline Point, °C (°F) | 88.5 (191.4) |
| Refractive Index, 70°C (158°F) | 1.5074 |

Furfural extraction of this stock was carried out in a 17 mm. ID glass column packed with 125 ml. of 0.61 cm (0.24 inch) Propak in the mixing zone. The extraction column was equipped with metering pumps, heaters, heater controls and level controls. About 20 ml. of coalescing material, equivalent to about 7.62 cm (3 inches) of the column, were placed in the column at a point 12.7 cm (5 inches) below the position of the interface. The coalescing materials are described in Table 2.

TABLE 2

| Material | Form |
|---|---|
| Polypropylene | Plug of 0.31 cm (0.012 inch) diameter fibers |
| Teflon (tm) | Irregular, thin flakes to 0.64 cm (1/4 inch) |
| Carborundum (tm) | 1.67 mm—0.85 mm (10—20 mesh) particles |
| Bender Slag | Bender sweetening process catalyst extracted with toluene for 24 hours prior to use. 1.67—0.85 mm (10—20 mesh). |
| Quartz | 1.67 mm—0.85 mm (10—20 mesh) chips. |

With each of these coalescers, furfural solvent was preheated to 107°C (225°F) and pumped to enter the top of the extraction column at a point just above the Propak packing. Similarly, the distillate was preheated to 107°C (225°F) and metered to enter the column at a point near the bottom of the Propak packing. At start-up, the extraction was allowed to proceed until the settling and mixing zones were full and raffinate had reached the top of the column. Raffinate and extract were then slopped for 6 hours before product was collected. The results are summarized in Table 3.

4

**0 020 094**

TABLE 3

Furfural Extraction of a Heavy Neutral Distillate Arab Light Stock Distillate
At 107°C (225°F) and 250% Vol Furfural in a Continuous 17 mm ID Column
Packed With Propak in the Extraction Zone and With 20 ml. of
Coalescer Material Below the Interface

| Coalescer Material Below Interface | Solvent Free Product | Yield % Vol. to Distillate | Gravity ° API | Aniline Point, °C (°F) | Refractive Index at 70°C |
|---|---|---|---|---|---|
| None | Raffinate | 48.5 | 28.2 | 113.9 (237.0) | 1.4685 |
| | Extract | 51.5 | 9.9 | 50.2 (122.4) | 1.5479 |
| Polypropylene | Raffinate | 49.0 | 28.8 | 116.6 (240.8) | 1.4664 |
| | Extract | 51.0 | 9.9 | 57 (134.7) | 1.5441 |
| Teflon (tm) | Raffinate | 53.5 | 27.9 | 113 (235.4) | 1.4705 |
| | Extract | 46.5 | 8.9 | 46.5 (115.8) | 1.5525 |
| Carborundum (tm) | Raffinate | 54.0 | 27.5 | 112.9 (235.3) | 1.4706 |
| | Extract | 46.0 | 8.0 | 40.5 (104.9) | 1.5577 |
| Bender Slag | Raffinate | 54.0 | 27.0 | 110.5 (230.9) | 1.4739 |
| | Extract | 46.0 | 7.2 | 38.5 (101.3) | 1.5614 |
| Quartz | Raffinate | 54.0 | 27.8 | 112.9 (235.3) | 1.4697 |
| | Extract | 46.0 | 7.6 | 39.1 (102.3) | 1.5586 |

Example 2

This Example illustrates several runs using the preferred teflon in the form of 0.043 cm thickness × 0.097 cm shavings. The method used was substantially that of Example 1.

The distillate employed was an Arab Light heavy neutral distillate having the properties shown in Table 4.

TABLE 4

| | |
|---|---|
| Gravity, °API | 19.0 |
| Sp. Gravity, 60/16°C (60°F) | 0.9402 |
| Pour Point, °C (°F) | 46 (115) |
| Aniline Point, °C (°F) | 81.6 (178.8) |
| Neut. No. | <0.07 |

Table 5 summarizes the date obtained.

TABLE 5
Furfural Extraction of Heavy Neutral Distillate at 107°C (225°F) and 250% Vol.
Furfural in a Continuous 17 mm ID Column Packed With Propak in the
Extraction Zone and With 20 ml of Teflon (tm) Below the Interface

| Coalescer Material Below Interface | Solvent Free Product | Yield % Vol. to Distillate | Gravity °API | Aniline Point, °C (°F) |
|---|---|---|---|---|
| None | Raffinate | 52.2 | 28.9 | 115.7 (240.2) |
| | Extract | 47.8 | 9.3 | 47.8 (118.0) |
| Teflon (tm) | Raffinate | 54.8 | 28.7 | 116 (240.8) |
| | Extract | 45.2 | 7.6 | 38.7 (101.7) |
| Teflon (tm) | Raffinate | 55.2 | 28.8 | 115.6 (240.0) |
| | Extract | 44.8 | 8.0 | 39.3 (102.7) |

5

# 0 020 094

TABLE 5 (Continued)

| Coalescer Material Below Interface | Solvent Free Product | Yield % Vol. to Distillate | Gravity °API | Aniline Point, °C (°F) |
|---|---|---|---|---|
| Teflon (tm) | Raffinate | 55.4 | 29.1 | 116.1 (241.0) |
|  | Extract | 44.6 | 7.9 | 39.2 (102.6) |
| Teflon (tm) | Raffinate | 55.2 | 28.8 | 115.9 (240.7) |
|  | Extract | 44.8 | 7.7 | 39.3 (102.7) |
| Teflon (tm) | Raffinate | 54.8 | 29.0 | 115.8 (240.4) |
|  | Extract | 45.2 | 7.8 | 38.6 (101.4) |
| Teflon (tm) | Raffinate | 54.8 | 28.9 | 115.7 (240.3) |
|  | Extract | 45.2 | 8.0 | 40.8 (105.5) |
| Average (tm) | Raffinate | 55.0 | 28.9 | 115.8 (1240.5) |
|  | Extract | 45.0 | 7.9 | 39.3 (102.8) |

## Claims

1. An improved method of producing lubricating oils by solvent extraction which comprises contacting a lubricating oil-containing hydrocarbon charge under conditions of solvent selectivity to permit the recovery of a raffinate phase which, upon dewaxing, will provide a lubricating oil product, characterized in that a coalescing surface is placed to contact the extract phase prior to its exit from the extractor.

2. The method of Claim 1 characterized in that the lubricating oil produced has a viscosity index of at least 90.

3. The method of Claim 1 characterized in that the coalescer is polypropylene.

4. The method of Claim 1 characterized in that the coalescer is teflon (tm).

5. The method of Claim 1 characterized in that the coalescer is carborundum (tm).

6. The method of Claim 1 characterized in that the coalescer is bender slag.

7. The method of Claim 1 characterized in that the coalescer is quartz.

8. The method of Claim 1 characterized in that the coalescer surfaces range from 1.67 mm—1.20 mm (10—14 mesh) to 0.59 mm—0.42 mm (30—40 mesh) for particles.

9. The method of Claim 1 characterized in that the coalescer surfaces range from 0.013 to 1.20 mm (0.005 to 0.25 inch) in diameter for flakes or fibres.

## Revendications

1. Procéde amélioré pour produire des huiles lubrifiantes par extraction par solvant qui comprend le contact d'une charge hydrocarbonée contenant une huile lubrifiante dans des conditions de dissolution sélective pour permettre la récupération d'une phase de raffinat qui, après déparaffinage, fournit un produit constitué d'une huile lubrifiante, caractérisé en ce qu'une surface coalescente est placée pour venir en contact avec la phase d'extrait avant qu'elle sorte de l'extracteur.

2. Procédé selon la revendication 1 caractérisé en ce que l'huile lubrifiante produite a un indice de viscosité d'au moins 90.

3. Procédé selon la revendication 1 caractérisé en ce que le coalesceur est le polypropylène.

4. Procédé selon la revendication 1 caractérisé en ce que le coalesceur est le Téflon[R].

5. Procédé selon la revendication 1 caractérisé en ce que le coalesceur est le Carborundum[R].

6. Procédé selon la revendication 1 caractérisé en ce que le coalesceur est une scorie du procédé Bender.

7. Procédé selon la revendication 1 caractérisé en ce que le coalesceur est du quartz.

8. Procédé selon la revendication 1 caractérisé en ce que les surfaces du coalesceur sont comprises entre 1,67 mm—1,20 mm et 0,59 mm—0,42 mm pour des particules.

9. Procédé selon la revendication 1 caractérisé en ce que les surfaces des coalesceurs ont un diamètre compris dans la gamme de 0,013 à 1,20 mm pour les paillettes ou les fibres.

## Patentansprüche

1. Verfahren zur Herstellung von Schmierölen durch Lösungsmittelextraktion, wobei ein Schmieröl-haltiges Kohlenwasserstoffeinsatzmaterial unter Bedingungen von Lösungsmittel-Selektivität zur Ermöglichung der Gewinnung einer Raffinatphase behandelt wird, die beim Entwachsen

## 0 020 094

ein Schmierölprodukt ergibt, dadurch gekennzeichnet, daß eine koaleszierende Oberfläche zur Berührung der Extraktphase vor deren Ausgang aus dem Extraktor angeordnet wird.

2. Verfahren nach Anspruch 1, dadurch gekennzeichnet, daß das hergestellte Schmieröl einen Viskositätsindex von wenigstens 90 hat.

3. Verfahren nach Anspruch 1, dadurch gekennzeichnet, daß das Koaleszierungsmittel Polypropylen ist.

4. Verfahren nach Anspruch 1, dadurch gekennzeichnet, daß das Koaleszierungsmittel Teflon (tm) ist.

5. Verfahren nach Anspruch 1, dadurch gekennzeichnet, daß das Koaleszierungsmittel Carborundum (tm) ist.

6. Verfahren nach Anspruch 1, dadurch gekennzeichnet, daß das Koaleszierungsmittel eine Bender-Schlacke ist.

7. Verfahren nach Anspruch 1, dadurch gekennzeichnet, daß das Koaleszierungsmittel Quarz ist.

8. Verfahren nach Anspruch 1, dadurch gekennzeichnet, daß die Koaleszierungsmittel-Oberflächen im Bereich von 1,67 mm—1,20 mm (10—14 Siebmaschenweiten) bis 0,59 mm—0,42 mm (30—40 Siebmaschenweiten) für die Teilchen liegen.

9. Verfahren nach Anspruch 1, dadurch gekennzeichnet, daß die Koaleszierungsmittel-Oberflächen im Bereich von 0,013 bis 1,20 mm (0,005 bis 0,25 engl. Zoll) Durchmesser für Flocken oder Fasern liegen.